# EUROPÄISCHE PATENTANMELDUNG

(11) **EP 0 904 882 A2**
(43) Veröffentlichungstag der Anmeldung: **31.03.1999**
(21) Anmeldenummer: 98117317.2
(22) Anmeldetag: 12.09.1998
(51) Int. Cl.: B23K 3/06

(54) **Vorrichtung zum Aufbringen von Klebepunkten auf ein Substrat**

(30) Priorität: 26.09.1997 DE 19742711
(71) Anmelder: Intec Bielenberg GmbH & Co. KG, 50169 Kerpen-Türnich (DE)
(72) Erfinder: Lehmann, Manfred, 51145 Köln (DE)
(74) Vertreter: Müller-Gerbes, Margot, Dipl.-Ing.

(57) **Zusammenfassung**

Die Erfindung betrifft eine Vorrichtung zum Aufbringen von Klebstoff in Form von Klebepunkten mittels Auftragsdüsen auf ein Substrat, mit einer Dosiereinrichtung und einer der Dosiereinrichtung nachgeordneten Verteileinrichtung zum Fördern und Verteilen eines vorbestimmbaren Volumens an Klebstoff zu jeder Auftragsdüse und einer Temperiereinrichtung zum Erwärmen eines Temperiermediums zum Temperieren des Klebstoffes, wobei die Dosiereinrichtung und die Verteileinrichtung mittels einer einen Klebstoffkanal enthaltenden Förderleitung miteinander verbunden sind und von der Verteileinrichtung Zuführleitungen enthaltend einen Klebstoffkanal zu den Auftragsdüsen führen, wobei ein geschlossener Kreislauf für das Temperiermedium, ausgehend von der Temperiereinrichtung über die Verteileinrichtung und die Zuführleitungen zu den Auftragsdüsen und wieder zurück über die Zuführleitungen und die Verteileinrichtung zu der Temperiereinrichtung gebildet ist.

## Beschreibung

Die Erfindung betrifft eine Vorrichtung zum Aufbringen von Klebstoff in Form von Klebepunkten mittels Auftragsdüsen auf ein Substrat, mit einer Dosiereinrichtung und einer der Dosiereinrichtung nachgeordneten Verteileinrichtung zum Fördern und Verteilen eines vorbestimmbaren Volumens an Klebstoff zu jeder Auftragsdüse und einer Temperiereinrichtung zum Erwärmen eines Temperiermediums zum Temperieren des Klebstoffes, wobei die Dosiereinrichtung und die Verteileinrichtung mittels einer einen Klebstoffkanal enthaltenen Förderleitung miteinander verbunden sind und von der Verteileinrichtung Zuführleitungen, enthaltend einen Klebstoffkanal, zu den Auftragsdüsen führen.

Derartige Vorrichtungen zum Aufbringen einer Vielzahl von Klebepunkten werden beispielsweise bei der Automobilherstellung für die Verbindung mehrerer Blechteile der Automobilkarosserie verwendet. Die dabei zur Anwendung kommenden Kleber weisen üblicherweise eine über der Raumtemperatur liegende Verarbeitungstemperatur auf, so daß es notwendig ist, den von der Vorrichtung geförderten Klebstoff und sämtliche mit dem Klebstoff in Berührung kommenden Teile der Vorrichtung mittels einer Temperiereinrichtung auf die gewünschte Verarbeitungstemperatur des Klebstoffes zu temperieren, d. h. üblicherweise zu beheizen.

Hierzu ist es bekannt, die Auftragsdüsen und die Verteileinrichtung zum Verteilen des geförderten Klebstoffvolumens zu den Auftragsdüsen in einem mit einem Temperiermedium gefüllten wannenartigen Gehäuse unterzubringen und das Temperiermedium auf die gewünschte Verarbeitungstemperatur zu erwärmen. Nachteilig bei dieser bekannten Vorrichtung ist es, daß das wannenartige Gehäuse bei Füllung mit dem Temperiermedium ein beachtliches Gewicht erreichen kann, was unerwünscht hohe Anforderungen an die Statik der bekannten Vorrichtung stellt und die Handhabung unnötig erschwert. Darüber hinaus sind nachträgliche Veränderungen der Auftragsdüsenanzahl bzw. Anordnung bei der bekannten Vorrichtung nur sehr schwierig durchführbar, wie es auch sehr aufwendig ist, bei evtl. eintretenden Verstopfungen einzelner Auftragsdüsen diese zu reinigen bzw. auszutauschen.

Aufgabe der Erfindung ist es, ausgehend von den bekannten Vorrichtungen mit ihren vorangehend beschriebenen Nachteilen eine Vorrichtung vorzuschlagen, die nur ein geringes Gewicht aufweist und damit leicht handhabbar ist und darüber hinaus eine hohe Flexibilität hinsichtlich nachträglicher Veränderungen bietet und sich einfach warten läßt.

Diese Aufgabe wird mit einer erfindungsgemäß ausgestalteten Vorrichtung gemäß den kennzeichnenden Merkmalen des Patentanspruches 1 gelöst.

Vorteilhafte Ausgestaltungen der Erfindung sind den Unteransprüchen entnehmbar.

Die Erfindung schlägt vor, daß ein geschlossener Kreislauf für das Temperiermedium, ausgehend von der Temperiereinrichtung über die Verteileinrichtung und die Zuführleitungen zu den Auftragsdüsen und wieder zurück über die Zuführleitungen und die Verteileinrichtung zu der Temperiereinrichtung gebildet ist. Auf diese Weise werden die mit dem Klebstoff in Kontakt kommenden Teile der erfindungsgemäßen Vorrichtung und die Auftragsdüsen gleichmäßig vom Temperiermedium auf die gewünschte Temperatur erwärmt, wobei der Platzbedarf der erfindungsgemäß ausgebildeten Vorrichtung gegenüber dem bekannten Stand der Technik erheblich verringert wird, was die Handhabung der erfindungsgemäßen Vorrichtung erleichtert.

Gemäß einer vorteilhaften Ausführungsform der Erfindung wird vorgeschlagen, daß in der Verteileinrichtung, den Zuführleitungen und den Auftragsdüsen Temperierkanäle für das Durchleiten sowohl eines Vor- als auch Rücklaufs des im geschlossenen Kreislauf geführten Temperiermediums ausgebildet sind. Durch diese Temperierkanäle strömt das von der Temperiereinrichtung auf die gewünschte Temperatur aufgeheizte Temperiermedium und ermöglicht auf diese Weise eine einheitliche Erwärmung der mit dem Klebstoff in Kontakt kommenden Bauteile der erfindungsgemäßen Vorrichtung und damit letztendlich die Erwärmung des Klebstoffes auf seine gewünschte Verarbeitungstemperatur, bei der er die erfindungsgemäße Vorrichtung in flüssigem oder pastösem Zustand durchströmt und in Form von Klebstofftropfen auf das Substrat aufgebracht wird.

In einer vorteilhaften Ausführungsform der Erfindung wird vorgeschlagen, daß die Verteileinrichtung mehrteilig mit einem Oberteil und einem Unterteil für das Durchleiten des Vor- bzw. Rücklaufs des Temperiermediums und einem zwischen Ober- und Unterteil angeordneten Mittelteil für das Durchleiten des Klebstoffes ausgebildet ist. Das Mittelteil wird hierbei mittels der von Temperiermedium durchströmten Ober- und Unterteile temperiert.

Eine vorteilhafte Ausführungsform der Erfindung sieht vor, daß die Verteileinrichtung zylindrisch ausgebildet ist und das Oberteil, das Mittelteil und das Unterteil je einen Zylinderabschnitt bilden und axial übereinander angeordnet und miteinander verbindbar sind, so daß eine gute Wärmeleitung von dem den Vor- bzw. Rücklauf des Temperiermediums durchleitenden Oberteil bzw. Unterteil auf das den Klebstoff durchleitende Mittelteil der Verteileinrichtung bewirkbar ist.

Hierbei weisen vorteilhaft das Oberteil und das Unterteil der Verteileinrichtung jeweils zentrisch in ihrem Inneren einen Sammelraum für den Vor- bzw. Rücklauf des Temperiermediums und eine Vielzahl vom Sammelraum radial nach außen führende Temperierkanäle und einen aus dem jeweiligen Sammelraum axial zu der dem Mittelteil abgewandten Außenseite führenden Sammelkanal auf. An die Temperierkanäle des Oberteils und Unterteils sind die Temperierkanäle der Zuführleitungen und an den jeweiligen Sammelkanal der Vorlauf bzw. Rücklauf der Temperiereinrichtung anschließbar.

Zur Reduzierung der Teilezahl und des Fertigungsaufwands kann hierbei vorgesehen sein, daß das Oberteil und das Unterteil der Verteileinrichtung jeweils übereinstimmend, d. h. einander entsprechend ausgebildet sind.

Das Mittelteil der Verteileinrichtung weist vorteilhaft einen zentrisch in seinem Inneren ausgebildeten Verteilraum für den Klebstoff und eine Vielzahl vom Verteilraum radial nach außen führende Verteilkanäle und einen von außen radial in den Verteilraum führenden Zufuhrkanal auf, wobei an die Verteilkanäle die Klebstoffkanäle der Zuführleitungen und an den Zufuhrkanal der Klebstoffkanal der Förderleitung anschließbar sind.

Durch diese erfindungsgemäße Ausbildung der Verteileinrichtung dient diese nicht nur zum Verteilen des von der Dosiereinrichtung geförderten Volumens an Klebstoff mit ihrem Mittelteil auf die einzelnen Auftragsdüsen, sondern darüber hinaus auch zum Aufteilen des von der Temperiereinrichtung herangeführten Vorlaufs des Temperiermediums auf die einzelnen Zuführleitungen zu den Auftragsdüsen und nachfolgend auch zum erneuten Zusammenführen des von den einzelnen Auftragsdüsen über die Zuführleitungen in der Verteileinrichtung wieder zusammenlaufenden Rücklaufs des Temperiermediums, welcher nachfolgend erneut an die Temperiereinrichtung abgegeben wird, so daß der Kreislauf des Temperiermediums geschlossen ist. Infolge dieses vorangehend beschriebenen Durchströmens des Vor- bzw. Rücklaufs des Temperiermediums durch das Ober- bzw. Unterteil der Verteileinrichtung werden das Ober- und Unterteil der Verteileinrichtung erwärmt und zwar soweit, daß sie auch das zwischen Ober- und Unterteil angeordnete Mittelteil der Verteileinrichtung, welches mit dem Klebstoff in Berührung kommt, auf die für die Verarbeitung des Klebstoffes gewünschte Temperatur erwärmen.

Zur Schaffung einer möglichst universell einsetzbaren Verteileinrichtung ist diese vorteilhaft mit einer übereinstimmenden Anzahl von Verteilkanälen und Temperierkanälen im Mittelteil bzw. Ober- und Unterteil ausgestattet, die in Anschlußelemente für die Zuführleitungen im Bereich der zylindrischen Mantelfläche der Verteileinrichtung einmünden, so daß die Zuführleitungen mit ihren Temperier- bzw. Klebstoffkanälen entlang der Mantelfläche der Verteileinrichtung an deren Verteil- bzw. Temperierkanäle anschließbar sind. Hierbei kann es von Vorteil sein, eine ausreichend hohe Anzahl derartiger Temperier- und Verteilkanäle in der Verteileinrichtung vorzusehen, beispielsweise bis zu 30 derartiger Kanäle im Ober-, Unter- und Mittelteil der Verteileinrichtung, so daß eine genügend große Anzahl an Auftragsdüsen mit ihren jeweiligen Zuführleitungen an die Verteileinrichtung anschließbar sind. Sofern im konkreten Anwendungsfall weniger Auftragsdüsen benötigt werden, können die nicht verwendeten Temperier- und Verteilkanäle der Verteileinrichtung auf einfache Weise mittels Blindstopfen verschlossen werden, wodurch die erfindungsgemäße Vorrichtung modulartig erweiterbar ist.

Mit Vorteil werden die Temperierkanäle und die Verteilkanäle der Verteileinrichtung, in axialer Richtung derselben gesehen, deckungsgleich angeordnet. Auf diese Weise wird zwischen benachbarten Temperierkanälen und Verteilkanälen ein genügend großer Raum geschaffen, in dem Schraublöcher für die Verbindung von Oberteil, Mittelteil und Unterteil der Verteileinrichtung ausgebildet werden können.

Die im Rahmen der erfindungsgemäßen Vorrichtung eingesetzten Zuführleitungen zwischen der Verteileinrichtung und den Auftragsdüsen weisen vorteilhaft jeweils einen Klebstoffkanal für die Durchleitung des Klebstoffes, einen Temperierkanal für die Durchleitung des Vorlaufs des Temperiermediums und einen Temperierkanal für die Durchleitung des Rücklaufs des Temperiermediums auf, wobei der Klebstoffkanal und die Temperierkanäle der Zuführleitungen von einer wärmedämmenden Hülle umgeben sind und die Temperierkanäle schraubenlinienförmig um den Klebstoffkanal verlaufend angeordnet sind. Durch diese Anordnung ist der Klebstoffkanal mittels den von Temperiermedium durchströmten Temperierkanälen auf einfache Weise auf die für die Verarbeitung des Klebstoffes gewünschte Temperatur temperierbar.

Die an der erfindungsgemäßen Vorrichtung verwendeten Auftragsdüsen für den Klebstoff weisen ein Gehäuse auf, in dem Kanäle für das Durchleiten des im Klebstoffkanal der Zuführleitungen herangeführten Klebstoffs zu der Austrittsöffnung des Klebstoffes und Temperierkanäle für das Durchleiten des in den Temperierkanälen der Zuführleitung geführten Temperiermediums vorgesehen sind. Auf diese Weise sind die mit Klebstoff in Kontakt kommenden Auftragsdüsen mit den von Temperiermedium durchströmten Temperierkanälen auf die für die Verarbeitung des Klebstoffes gewünschte Temperatur temperierbar. Insbesondere sind für den Klebstoff sich verzweigende Kanäle mit einem Eingang unter Ausbildung mehrerer Austrittsöffnungen vorgesehen.

Sofern mehrere, vorzugsweise zwei oder drei Klebepunkte in geringem Abstand nebeneinander auf dem Substrat, beispielsweise Automobilblech aufgebracht werden sollen, kann es von Vorteil sein, vorzugsweise zwei bis drei Austrittsöffnungen für den Klebstoff in einer gemeinsamen Auftragsdüse vorzusehen und mittels einer gemeinsamen Zuführleitung mit der Verteileinrichtung zu verbinden, um den Klebstoff und auch das Temperiermedium zu den Auftragsdüsen zu leiten.

Eine vorteilhafte Ausführungsform der Auftragsdüsen sieht vor, daß diese zweiteilig mit zwei Gehäuseteilen ausgebildet sind, wobei in einem Gehäuseteil die Austrittsöffnungen und die Kanäle für das Durchleiten des Klebstoffes und in dem anderen Gehäuseteil die Temperierkanäle für das Durchleiten des Temperiermediums ausgebildet sind. Ähnlich wie vorangehend bereits bei der Verteileinrichtung beschrieben, ist es durch diese Ausgestaltung möglich, das mit dem Klebstoff in Kontakt kommende Gehäuseteil der Auftragsdüsen über das an diesem befestigte Gehäuseteil mit den Temperierkanälen zum Durchleiten des Temperiermediums auf die für die Verarbeitung des Klebstoffes gewünschte Temperatur zu temperieren.

Auch die im Rahmen der Erfindung eingesetzte Förderleitung zwischen der Dosiereinrichtung und der Verteileinrichtung kann vorteilhaft einen Klebstoffkanal und jeweils mindestens einen Temperierkanal für das Durchleiten des Vor- bzw. Rücklaufes eines Temperiermediums aufweisen, wobei vorteilhaft die Temperierkanäle schraubenlinienförmig um den Klebstoffkanal verlaufend angeordnet sind und von einer gemeinsamen wärmedämmenden Hülle umgeben sind. Auf diese Weise kann auch der in der Förderleitung angeordnete Klebstoffkanal für die Durchleitung des Klebstoffes mittels der von Temperiermedium durchströmten Temperierkanälen auf die für die Verarbeitung des Klebstoffes gewünschte Temperatur temperiert werden.

Da der Klebstoffkanal der Förderleitung üblicherweise ein gegenüber dem Klebstoffkanal der Zuführleitungen deutlich vergrößertes Volumen aufweist, kann es für die Sicherstellung einer ausreichenden Temperierbarkeit dieses Klebstoffkanals vorteilhaft sein, jeweils zwei Temperierkanäle für die Durchleitung des Vor- bzw. Rücklaufs des Temperiermediums vorzusehen und diese schraubenlinienförmig um den Klebstoffkanal verlaufend anzuordnen.

Eine derartige Förderleitung wird häufig mechanisch hoch beansprucht, da er die Verbindung zwischen der üblicherweise stationär aufgestellten Dosiereinrichtung und der in einem Werkzeug beweglich angebrachten Verteileinrichtung darstellt. Um hierbei unerwünschte Bewegungen der schraubenlinienförmig um den Klebstoffkanal verlaufend angeordneten Temperierkanäle zu verhindern, wird vorgeschlagen, daß Abstandshalter, wie Moosgummischläuche zwischen den schraubenlinienförmig um den Klebstoffkanal angeordneten Temperierkanälen vorgesehen sind.

Je nach Größe der erfindungsgemäß ausgestalteten Vorrichtung kann darüber hinaus die Förderleitung mit ihren Temperierkanälen an eine eigene Temperiereinrichtung, gegebenenfalls gemeinsam mit der Dosiereinrichtung angeschlossen sein. Es ist jedoch im Rahmen der Erfindung auch möglich, die Förderleitung mit ihren Temperierkanälen in den geschlossenen Kreislauf des Temperiermediums, welches durch die Verteileinrichtung und die Auftragsdüsen strömt, zu integrieren. In einem solchen Fall können die Temperierkanäle der Förderleitung der Führung des Vor- bzw. Rücklaufs des Temperiermediums zwischen der Temperiereinrichtung und der Verteileinrichtung dienen.

Eine besonders kompakte und einfach aufgebaute erfindungsgemäße Vorrichtung wird dadurch geschaffen, daß der geschlossene Kreislauf für das Temperiermedium durch sämtliche der Förderung und/oder Führung des Klebstoffes dienende Bauteile geführt ist, dergestalt, daß der geschlossene Kreislauf ausgehend von der Temperiereinrichtung über die Dosiereinrichtung, die Förderleitung, die Verteileinrichtung und die Zuführleitungen zu den Auftragsdüsen und nachfolgend wieder zurück über die Zuführleitungen, die Verteileinrichtung, die Förderleitung und die Dosiereinrichtung in die Temperiereinrichtung gebildet ist. Eine derartig ausgebildete erfindungsgemäße Vorrichtung benötigt somit nur noch eine einzige Temperiereinrichtung, d. h. die Erwärmung des Temperiermediums findet nur noch in einem einzigen Gerät statt, was den Bedienungsaufwand für die Temperierung drastisch reduziert, da nur noch eine Temperaturregelstelle für die gesamte erfindungsgemäße Vorrichtung benötigt wird.

Die Erfindung wird nachfolgend anhand von Ausführungsbeispielen näher erläutert:
- Figur 1: in schematisierter Darstellung ein Schaubild einer erfindungsgemäßen Vorrichtung,
- Figur 2: die Seitenansicht einer Verteileinrichtung gemäß Figur 1,
- Figur 3: die Aufsicht auf die Verteileinrichtung gemäß Figur 2,
- Figur 4: einen Schnitt durch das Oberteil der Verteileinrichtung gemäß den Pfeilen A - A in Figur 5,
- Figur 5: die Aufsicht auf das Oberteil der Verteileinrichtung,
- Figur 6: einen Schnitt durch das Unterteil der Verteileinrichtung gemäß Pfeilen C - C in Figur 7,
- Figur 7: die Aufsicht auf die Unterseite der Verteileinrichtung,
- Figur 8: einen Schnitt durch das Mittelteil der Verteileinrichtung gemäß Pfeilen B - B in Figur 9,
- Figur 9: die Aufsicht auf das Mittelteil der Verteileinrichtung,
- Figur 10: die Seitenansicht einer Auftragsdüse in perspektivischer Darstellung,
- Figur 11: einen Schnitt durch ein mit Temperierkanälen für das Temperiermedium versehenes Gehäuseteil der Auftragsdüse,
- Figur 12: eine weitere Ausführungsform eines Gehäuseteils der Auftragsdüse,
- Figur 13: in schematischer Darstellung eine Ansicht auf das der Führung des Klebstoffes dienende Teil eines Auftragsdüse,
- Figur 14: eine weitere Ausführungsform eines Gehäuseteils der Auftragsdüse,
- Figur 15: einen Schnitt durch eine Förderleitung gemäß Pfeilen F - F in Fig. 1 bzw. Fig. 17,
- Figur 16: in perspektivischer Darstellung einen Schnitt durch eine Zuführleitung,
- Figur 17: in schematischer Darstellung ein Schaubild einer weiteren Ausführungsform der Erfindung.

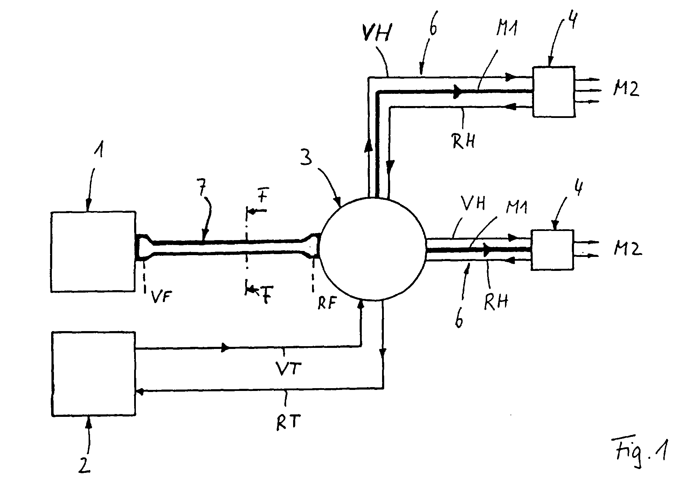

Eine Vorrichtung zum gleichzeitigen Aufbringen einer Vielzahl von Klebepunkten eines Klebstoffes auf ein Substrat ist in der Figur 1 schematisch dargestellt. Die Vorrichtung weist eine Dosiereinrichtung 1, eine Verteileinrichtung 3, mehrere Auftragsdüsen 4 und eine Temperiereinrichtung 2 auf. Die Dosiereinrichtung 1 ist über eine Förderleitung 7 mit der Verteileinrichtung 3 verbunden, von der aus Zuführleitungen 6 zu den einzelnen Auftragsdüsen 4 führen. Jede Auftragsdüse ist so ausgebildet, daß sie vorzugsweise mehr als eine Austrittsöffnung aufweist, so daß mit jeder Auftragsdüse entsprechend ihrer Anzahl von Austrittsöffnungen eine entsprechende Anzahl von Klebepunkten gleichzeitig hergestellt werden kann. Der Auftrag der Klebepunkte eines Klebstoffes auf ein hier nicht dargestelltes Substrat erfolgt in der Weise, daß die Dosiereinrichtung 1 ein vorbestimmbares Volumen an Klebstoff über die Förderleitung 7 zu der Verteileinrichtung 3 fördert, in der dieses herangeförderte vorbestimmte Volumen an Klebstoff gleichmäßig auf die einzelnen Zuführleitungen 6 als Klebstoffströme M1 aufgeteilt wird. Aus den einzelnen Auftragsdüsen 4 tritt der jeweilige Klebstoffstrom M1 gemäß Pfeilen M2 aus und bildet die Klebepunkte auf dem Substrat.

Eine derartige Vorrichtung ist beispielsweise zum Aufbringen einer Vielzahl von Klebepunkten auf Automobilbleche geeignet, um diese Automobilbleche miteinander zu verbinden. Die hierbei eingesetzten Klebstoffe weisen üblicherweise eine oberhalb der Raumtemperatur liegende Verarbeitungstemperatur auf, so daß es erforderlich ist, den Klebstoff auf diese Verarbeitungstemperatur zu erwärmen und Wärmeverluste auszugleichen. Hierfür ist die Temperiereinrichtung 2 vorgesehen, um mittels ihres Temperiermediums die mit Klebstoff in Kontakt kommenden Teile, zumindest die Verteileinrichtung 3 und die Auftragsdüsen 4 auf eine Temperatur zu erwärmen, die es ermöglicht, den Klebstoff auf seine gewünschte Verarbeitungstemperatur zu temperieren.

Zum Zwecke dieser Erwärmung umfaßt die Temperiereinrichtung 2 beispielsweise einen Durchlauferhitzer als Temperiergerät mit Wasser als Temperiermedium, um mit Hilfe dieses Wassers die zu temperierenden Bauteile der Vorrichtung zu erwärmen. Die in der Figur 1 dargestellte Vorrichtung weist hierzu einen geschlossenen Kreislauf für das Temperiermedium auf, der von dem als Temperiereinrichtung 2 dienenden Temperiergerät als Vorlauf VT zur Verteileinrichtung 3 geführt ist, von dort entlang der Zuführleitungen 6 als Vorlauf VH zu den Auftragsdüsen 4 strömt und von dort wieder zurück über die Zuführleitungen 6 als Rücklauf RH zur Verteileinrichtung 3 und von dieser Verteileinrichtung 3 als Rücklauf RT wieder in die Temperiereinrichtung 2 gelangt.

Ähnlich wie bei der Führung des Klebstoffes dient die Verteileinrichtung 3 auch innerhalb des geschlossenen Kreislaufs des Temperiermediums dazu, den von der Temperiereinrichtung 2 herangeführten Vorlauf VT aufzuteilen und zu gleichen Teilen als Vorlauf VH auf die einzelnen zu den Auftragsdüsen 4 führenden Zuführleitungen 6 zu verteilen. Umgekehrt dient die Verteileinrichtung 3 auch dazu, die einzelnen über die Zuführleitungen 6 von den Auftragsdüsen 4 zurückströmenden Rückläufe RH des Temperiermediums zusammenzuführen und als gemeinsamen Rücklauf RT an die Temperiereinrichtung zurückzugeben.

Durch diese Führung des Temperiermediums in einem geschlossenen Kreislauf ist es möglich, mit einer einzigen Temperiereinrichtung 2 die Verteileinrichtung 3, sämtliche Zuführleitungen 6 und sämtliche Auftragsdüsen 4 und damit den Klebstoff auf diesem Weg von der Dosiereinrichtung bis zum Austritt aus den Auftragsdüsen auf die für die Verarbeitung des Klebstoffes gewünschte Temperatur zu erwärmen. Die Vorrichtung kommt durch diesen geschlossenen Kreislauf ohne zusätzliche wannenartige Gehäuse od. dgl. aus, in denen das Temperiermedium gehalten wird, was die Größe und das Gewicht der Vorrichtung erheblich verringert und damit deren Handhabbarkeit erleichtert.

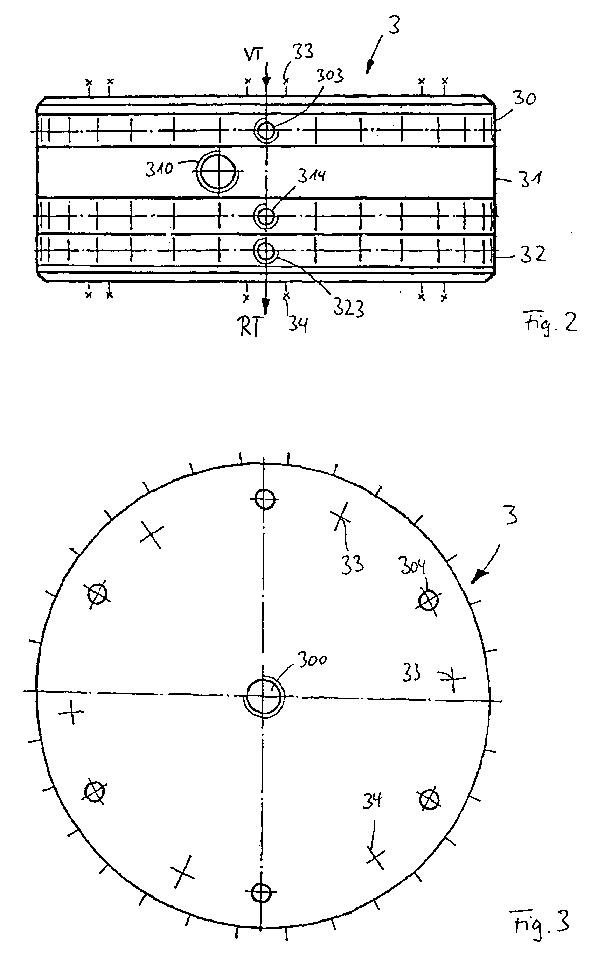

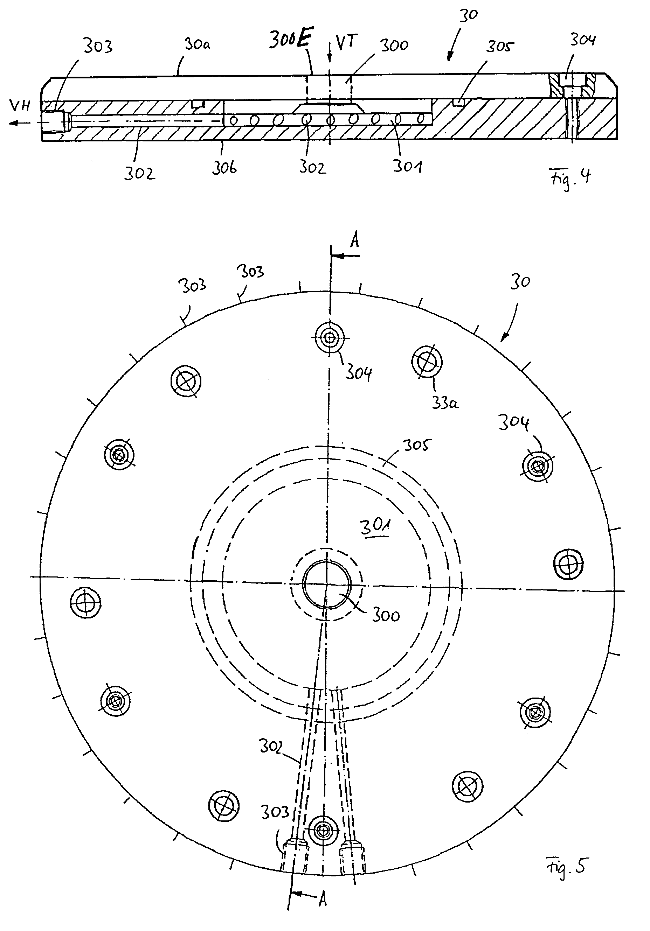

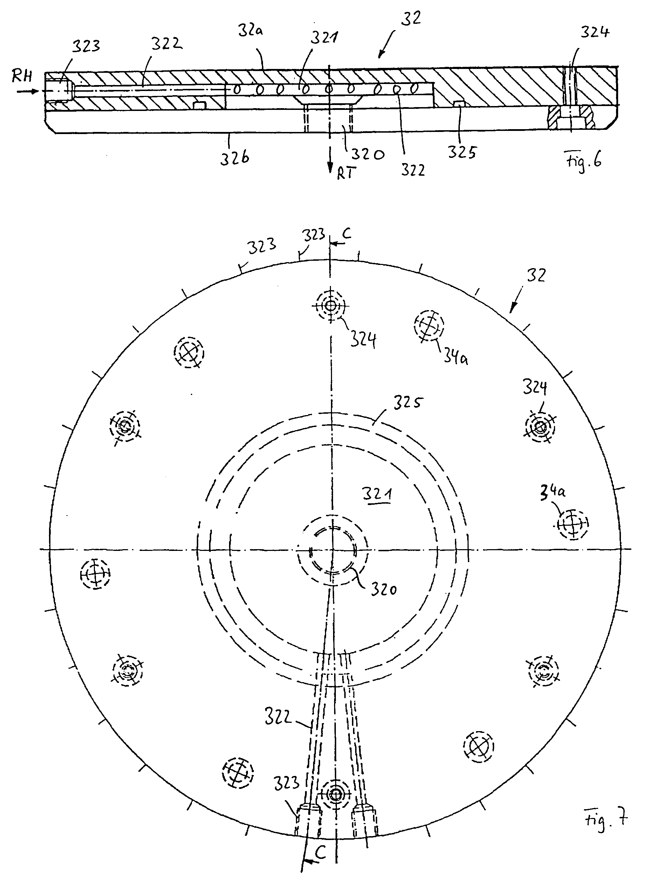

Die in der Figur 1 lediglich schematisch dargestellte Verteileinrichtung 3 ist in den Figuren 2 bis 9 an einem Ausführungsbeispiel in näheren Einzelheiten dargestellt. Wie insbesondere den Figuren 2 und 3 entnehmbar ist, weist die Verteileinrichtung 3 eine zylindrische Form auf und ist aus mehreren aufeinandergesetzten und mittels Schrauben 33, 34 in Schraublöchern 33a, 34a, 31a zusammengefügten zylindrischen Teilen, die ein Oberteil 30, ein Mittelteil 31 und ein Unterteil 32 bilden, aufgebaut. Hierbei dienen das Oberteil 30 und das Unterteil 32 der Verteileinrichtung dem Durchleiten des Temperiermediums, während das zwischen dem Oberteil 30 und dem Unterteil 32 angeordnete Mittelteil 31 dem Durchleiten und Verteilen des Klebstoffes dient. Im vorliegenden Beispiel wird durch das Oberteil 30 der Vorlauf VT und durch das Unterteil 32 der Rücklauf RH des Temperiermediums geführt. Diese vorangehend beschriebene Zuordnung von Oberteil 30 und Unterteil 32 zum Vor- bzw. Rücklauf des Temperiermediums ist lediglich beispielhaft gewählt, die umgekehrte Zuordnung ist ebenfalls möglich.

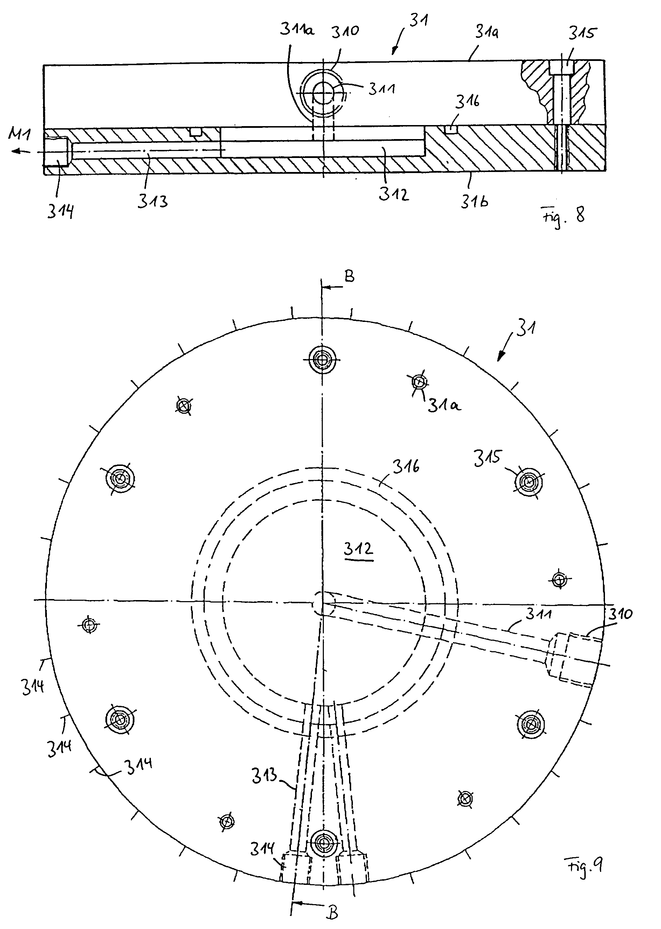

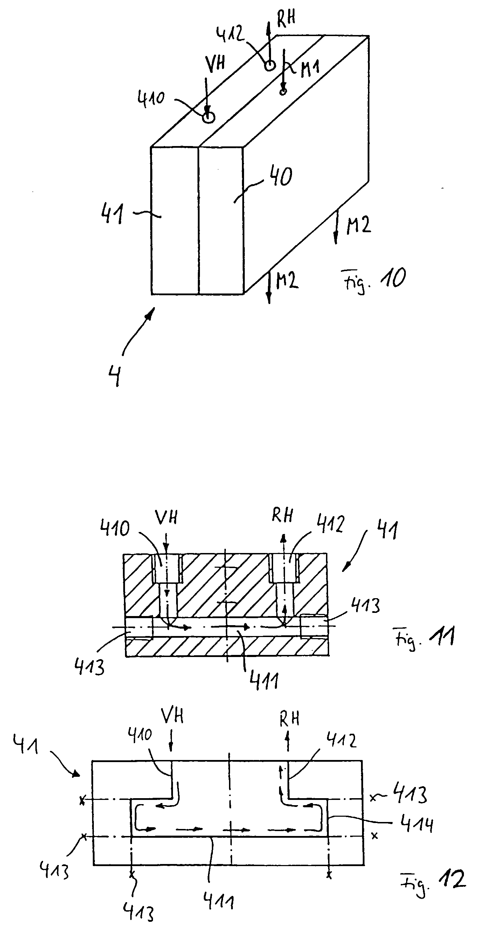

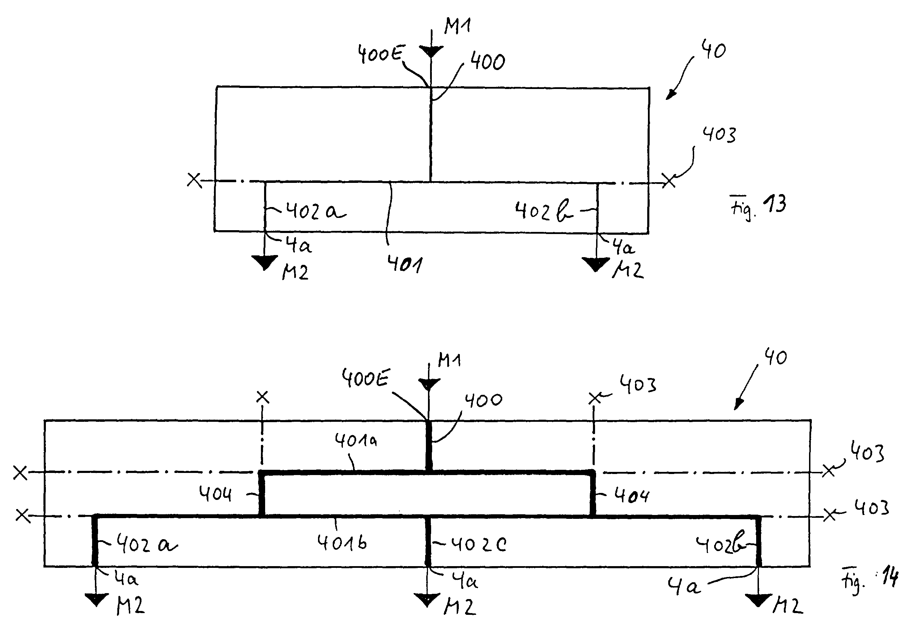

In den Figuren 4 und 5 ist das Oberteil 30 der Verteileinrichtung 3 in näheren Einzelheiten dargestellt. Ausgehend von seiner Oberseite, die zugleich die Oberseite der dreiteilig ausgebildeten Verteileinrichtung 3 darstellt, weist das Oberteil 30 den zentrisch angeordneten axial in das Innere des Oberteils 30 führenden Sammelkanal 300 auf, über dessen Eingang 300 E das von der Temperiereinrichtung 2 herangeführte Temperiermedium des Vorlaufs VT zur Verteileinrichtung 3 zugeführt wird. Der Sammelkanal 300 mündet im Inneren des Oberteils 30 in einen gegenüber dem Sammelkanal 300 erweiterten Sammelraum 301 ein, von dem eine Vielzahl sternförmig und radial nach außen bis zur Mantelfläche des Oberteils 30 führende Temperierkanäle 302 ausgehen. Diese Temperierkanäle 302 weisen jeweils gleiche Längen und Durchmesser auf, so daß das über den Sammelkanal 300 als Vorlauf VT eintretende Temperiermedium aus dem Sammelraum 301 zu gleichen Teilen auf die Temperierkanäle 302 aufgeteilt wird und diese durchströmt. Am äußeren Ende der Temperierkanäle 302 sind jeweils Gewindebohrungen 303 als Ausgänge vorgesehen, in die geeignete Schlauchanschlußelemente zum Anschluß von als Temperierkanäle dienenden Schlauchleitungen der Zuführleitungen 6 zu den einzelnen Auftragsdüsen 4 anschließbar sind.

Zur leichteren Herstellung des vorangehend beschriebenen Oberteils 30 ist dieses, wie insbesondere der Figur 4 entnehmbar ist, aus zwei Teilen 30a, 30b zusammengesetzt hergestellt, die über Verschraubungen in Schraublöchern 304 miteinander verbunden sind und über eine im Teil 30b ausgebildete Dichtungsnut 305 mit hier nicht eingezeichneter Dichtung gegeneinander abgedichtet sind. In dem Teil 30a des Oberteils 30 ist der Sammelkanal 300 ausgebildet, in dem Teil 30b sind der Sammelraum 301 und die sternförmig radial angeordneten Temperierkanäle 302 vorgesehen. Die Schraublöcher 304 zum Verbinden der Teile 30a, 30b und die Schraublöcher 33a zum Einschrauben der Schrauben 33 zwecks Befestigung des Oberteils 30 am Mittelteil 31 sind jeweils in beiden Teilen 30a, 30b miteinander fluchtend ausgebildet, wobei die Schraublöcher 304, 33a jeweils abwechselnd im Oberteil 30 angeordnet sind.

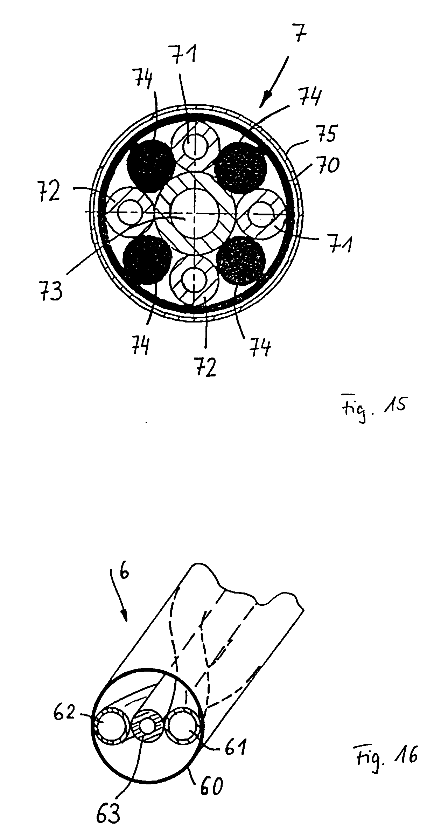

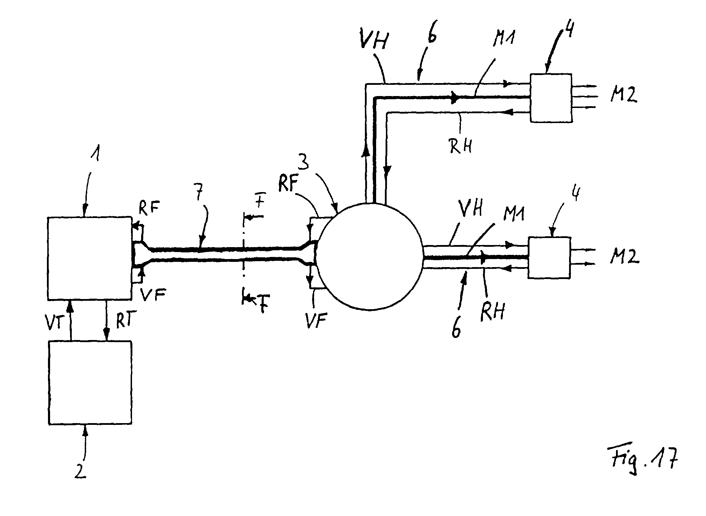

Einen nahezu identischen Aufbau weist das in den Figuren 6 und 7 in näheren Einzelheiten dargestellte Unterteil 32 der Verteileinrichtung auf, welches der Aufnahme und Führung des Rücklaufes RH des Temperiermediums von den einzelnen Zuführleitungen 6 zum Temperiergerät 2 dient, wobei jedoch die Strömungsrichtung durch das Unterteil 32 gegenüber der Strömungsrichtung durch das Oberteil 30 genau umgekehrt verläuft. Das Unterteil 32 weist ebenfalls sternförmig radial angeordnete Temperierkanäle 322 auf, die in einem zentrisch angeordneten Sammelraum 321 münden, der dem Sammelraum 301 des Oberteils 30 in etwa entspricht. Aus diesem Sammelraum 321 im Inneren des Unterteils 32 führt ein Sammelkanal 320 zentrisch axial zur Unterseite des Unterteils 32, die gleichzeitig auch die Unterseite der Verteileinrichtung 3 darstellt. Die Temperierkanäle 322 weisen an ihrer Eingangsseite für den Rücklauf Gewindebohrungen 323 für Anschlußmittel für die Zuführleitungen 6 auf. Die einzelnen Rückläufe RH der Zuführleitungen 6 strömen von den jeweiligen Auftragsdüsen 4 über die in den Gewindebohrungen 323 eingesetzten Anschlußmittel für die Temperierkanäle der Zuführleitungen in den Sammelraum 321. Aus dem Sammelraum 321 treten die Rückläufe RH gemeinsam als vereinigter Rücklauf RT des Temperiermediums aus, der der Temperiereinrichtung 2 zugeführt wird. Auch das Unterteil 32 ist zur Erleichterung der Herstellung aus zwei Teilen 32a, 32b zusammengesetzt und über Verschraubungen in Schraublöchern 324 und in eine Dichtungsnut 325 eingesetzte Dichtungen verbunden, wobei das Teil 32b den Sammelkanal 320 aufweist und im Teil 32a die radial sternförmig angeordneten Temperierkanäle 322 und der Sammelraum 321 ausgebildet sind.

Zwischen dem Oberteil 30 und dem Unterteil 32 ist das Mittelteil 31 der Verteileinrichtung 3 angeordnet. Dieses Mittelteil 31, welches in den Figuren 8 und 9 in näheren Einzelheiten dargestellt ist, weist ebenfalls eine zylindrische Form auf und ist aus zwei Teilen 31a, 31b zur Erleichterung der Fertigung zusammengesetzt und über Verschraubungen in Schraublöchern 315 und Dichtungen in einer Dichtungsnut 316 miteinander verbunden. Im Teil 31a des Mittelteils 31 ist ein Zufuhrkanal 311 ausgebildet, der ausgehend von der Mantelfläche des Mittelteils 31 als Eingang radial nach Innen verlaufend angeordnet ist und über einen senkrecht nach unten verlaufenden zentrisch angeordneten Kanalabschnitt 311a in einen Verteilraum 312 einmündet. An den Zufuhrkanal 311 kann im Bereich der Mantelfläche des Mittelteils 31 der Klebstoffkanal der Förderleitung 7 an eine geeignete in eine Gewindebohrung 310 am Ende des Zufuhrkanals 311 eingesetzte Anschlußeinrichtung angeschlossen werden, so daß der von der Dosiereinrichtung 1 über die Förderleitung 7 herangeführte Volumenstrom an Klebstoff über den Zufuhrkanal 311 in den Verteilraum 312 des Mittelteils 31 gelangt. Von diesem Verteilraum 312 führen wiederum sternförmig radial angeordnete Verteilkanäle 313, die jeweils gleiche Durchmesser und Längen aufweisen, zur Mantelfläche des Teils 31b des Mittelteils 31, wobei am äußeren Ende der Verteilkanäle 313 wiederum Gewindebohrungen 314 zum Einschrauben geeigneter Anschlußmittel für die Klebstoffkanäle der Zuführleitungen 6 vorgesehen sind. Ähnlich wie der Vorlauf VT des Temperiermediums im Oberteil 30 der Verteileinrichtung 3 wird somit der über den Zufuhrkanal 311 eintretende Volumenstrom an Klebstoff im Verteilraum 312 zu gleichen Teilen auf die Verteilkanäle 313 aufgeteilt und tritt als Klebstoffstrom M1 aus den Verteilkanälen 313 aus und gelangt über die Zuführleitungen 6 zu den Auftragsdüsen 4.

Mittels der Verteileinrichtung 3 wird der Vorlauf VT des Temperiermediums von der Temperiereinrichtung 2 auf die einzelnen Zuführleitungen 6 der Auftragsdüsen 4 aufgeteilt, die Rückläufe RH von den Auftragsdüsen 4 über die Zuführleitungen 6 zu einem gemeinsamen Rücklauf RT zur Temperiereinrichtung 2 zusammengeführt und der Klebstoffstrom von der Förderleitung 7 auf die Zuführleitungen 6 zu den Auftragsdüsen 4 mit Teilströmen M1 aufgeteilt. Wesentlich für die Verarbeitungssicherheit ist es dabei, daß sowohl das Oberteil 30 vom Vorlauf als auch das Unterteil 32 vom Rücklauf des Temperiermediums durchströmt werden und sich entsprechend der Temperatur des Temperiermediums erwärmen und das zwischen dem Oberteil 30 und Unterteil 32 der Verteileinrichtung 3 in Kontakt mit denselben angeordnete Mittelteil 31, durch das der Klebstoff geleitet wird, zwangsläufig auf die für die Verarbeitung des Klebstoffes gewünschte Temperatur erwärmt wird, so daß auf einfache Weise eine Temperierung des Klebstoffes beim Durchströmen der Verteileinrichtung 3 erfolgt. Da jedoch die Strömungswege von Vorlauf VT, Rücklauf RT des Temperiermediums im Oberteil 30 und Unterteil 32 streng vom durch das Mittelteil 31 verlaufenden Klebstoffstrom getrennt sind, besteht keinerlei Gefahr einer möglichen Kontaminierung des Klebstoffes mit Temperiermedium und umgekehrt. Bevorzugt ist die Verteileinrichtung aus einem gut wärmeleitenden Metall gefertigt.

Wie der Darstellung gemäß Figur 2 entnehmbar ist, erfolgt die Anordnung der Temperierkanäle und Verteilkanäle im Oberteil 30, Unterteil 32 und Mittelteil 31 in der Weise, daß diese Kanäle jeweils parallel zueinander radial und sternförmig im Oberteil 30, Unterteil 32 und Mittelteil 31 angeordnet sind und in axialer Richtung der zylindrisch ausgebildeten Verteileinrichtung 3 betrachtet jeweils deckungsgleich angeordnet sind. Es ist von daher möglich, an jede Gruppe von parallel und deckungsgleich verlaufenden Temperierkanälen im Oberteil 30 und Unterteil 32 und Verteilkanal im Mittelteil 31 jeweils eine Zuführleitung 6 zu einer Auftragsdüse 4 anzuschließen.

Eine solche Zuführleitung 6, die als Verbindung zwischen der Verteileinrichtung 3 und den Auftragsdüsen 4 dient, ist in der Figur 16 in näheren Einzelheiten dargestellt. Entsprechend dem vorangehend erläuterten Aufbau der Verteileinrichtung weist die Zuführleitung 6 einen zentral angeordneten Klebstoffkanal 63 auf, der mit einem Verteilkanal 313 des Mittelteils 31 der Verteileinrichtung 3 verbunden wird und der Führung eines Klebstoffstromes M1 zu einer Auftragsdüse 4 dient. Darüber hinaus beinhaltet die Zuführleitung 6 zwei Temperierkanäle 61, 62, wovon der eine Temperierkanal 61 der Führung des Vorlaufs VH des Temperiermediums dient und mit einem Temperierkanal 302 des Oberteils 30 der Verteileinrichtung 3 verbunden wird und der andere Temperierkanal 62 der Führung des Rücklaufes RH von der Auftragsdüse 4 zur Verteileinrichtung 3 dient und mit einem Temperierkanal 322 des Unterteils 32 der Verteileinrichtung 3 verbunden wird. Der Klebstoffkanal 63 und die Temperierkanäle 61, 62 der Zuführleitung 6 sind von einer wärmedämmenden Hülle 60 umgeben. Um den Klebstoffkanal 63 der Zuführleitung 6, der mit dem Klebstoff in Kontakt kommt, auf die für die Verarbeitung gewünschte Temperatur zu temperieren, sind die Temperierkanäle 61, 62 der Zuführleitung 6 schraubenlinienförmig um den Klebstoffkanal 63 verlaufend angeordnet, so daß der Klebstoffkanal 63 von den mit Temperiermedium im Vorlauf VH bzw. Rücklauf RH durchströmten Temperierkanälen 61, 62 entsprechend der Temperatur des Temperiermediums erwärmt wird.

Diese einseitig an die Verteileinrichtung 3 angeschlossene Zuführleitung 6 führen zu Auftragsdüsen 4, die in den Figuren 10 bis 14 in näheren Einzelheiten dargestellt sind.

Ähnlich wie auch die Verteileinrichtung 3 ist jede Auftragsdüse 4 mehrteilig mit Gehäuseteilen 40, 41 ausgebildet, siehe hierzu Figur 10, die in nicht näher dargestellter Weise miteinander verbunden sind. Das Gehäuseteil 40, welches in den Figuren 13 und 14 in zwei Ausführungsformen näher dargestellt ist, dient hierbei der Führung des Klebstoffes, während das Gehäuseteil 41, das in den Figuren 11 und 12 in zwei Ausführungsformen näher dargestellt ist, der Führung des Temperiermediums dient.

Das der Führung des Klebstoffes dienende Gehäuseteil 40 der Auftragsdüse 4 ist im wesentlichen quaderförmig ausgebildet und weist von seinem Eingang 400 E ausgehend ein sich in seinem Inneren verzweigendes Kanalsystem mit Klebstoffkanalabschnitten 400, 401, 402 auf, die zu einer entsprechenden Anzahl von Auftrittsöffnungen 4a für den Klebstoff führen. Der von der Zuführleitung 6 über den Klebstoffkanal 63 herangeführte Teilvolumenstrom M1 an Klebstoff tritt über den Klebstoffkanalabschnitt 400 in das Gehäuseteil 40 ein und verläßt dieses Gehäuseteil 40 über die verzweigten Klebstoffkanalabschnitte 402a,b, an deren unteren Ende die Austrittsöffnungen 4a der Auftragsdüse 4 angeordnet sind, wobei der Austritt des Klebstoffes mit Pfeilen M2 gekennzeichnet ist und jeweils einen Klebepunkt des Klebstoffes auf dem hier nicht dargestellten Substrat, beispielsweise Automobilblech hinterläßt. Je nach vorherrschenden Gegebenheiten und Anzahl und Ausrichtung der Klebepunkte können dabei in dem Gehäuseteil 40 ein, zwei oder drei oder mehr Austrittsöffnungen 4a für den Klebstoff gemäß Pfeilen M2 vorgesehen sein. Im Ausführungsbeispiel gemäß Figur 13 sind zwei Austrittsöffnungen 4a vorgesehen, die am Ende der Klebstoffkanalabschnitte 402a, b angeordnet sind und über einen gemeinsamen Klebstoffkanalabschnitt 401 mit dem Klebstoffkanalabschnitt 400, über den der Klebstoffstrom M1 in das Gehäuseteil 40 eintritt, verbunden sind.

Im Ausführungsbeispiel gemäß Figur 14 hingegen umfaßt das Gehäuseteil 40 der Auftragsdüse 4 ein derart verzweigtes Kanalsystem, ausgehend vom Eingangskanal 400, daß drei Austrittsöffnungen 4a für den Klebstoffstrom M2 am Ende der Klebstoffkanalabschnitte 402a, b, c gebildet sind und über Klebstoffkanalabschnitte 401a, 401b, 404 mit dem Klebstoffkanalabschnitt 400, über den der Klebstoffstrom M1 in das Gehäuseteil 40 eintritt, verbunden sind.

Zur Erleichterung der Herstellung der Klebstoffkanalabschnitte im Gehäuseteil 40 wird vorgeschlagen, diese als Durchgangs- bzw. Sacklochbohrungen im Gehäuseteil 40 auszubilden und nachfolgend die nicht benötigten Längenabschnitte dieser Bohrungen mittels Blindstopfen 403 zu verschließen, so daß letztendlich nur der gewünschte Verlauf der Klebstoffkanalabschnitte im Gehäuseteil 40 freigelassen wird.

Zur Temperierung des mit dem Klebstoff in Kontakt kommenden Gehäuseteils 40 der Auftragsdüsen 4 wird das Gehäuseteil 41 verwendet, welches in den Figuren 11 und 12 näher dargestellt ist. Dieses Gehäuseteil 41 weist einen Temperierkanal 411 auf, durch den das von der Zuführleitung 6 über den Temperierkanal 61 als Vorlauf VH herangeführte Temperiermedium einströmt und nachfolgend als Rücklauf RH wieder aus dem Gehäuseteil 41 ausströmt und über den Temperierkanal 62 der Zuführleitung 6 an das Unterteil 32 der Verteileinrichtung 3 und nachfolgend an die Temperiereinrichtung 2 zurückgeleitet wird. Hierzu weist der Temperierkanal 411 an seinen beiden Enden Gewindebohrungen 410, 412 auf, in die geeignete Anschlußmittel zum Anschluß der Temperierkanäle 61, 62 der Zuführleitung 6 eingeschraubt werden können. Diese Anschlußmittel sind vorzugsweise gleich zu denen ausgebildet, die auch in die Gewindebohrungen 303, 323 von Oberteil 30 und Unterteil 32 der Verteileinrichtung 3 eingeschraubt werden und an die ebenfalls die Temperierkanäle 61, 62 der Zuführleitungen 6 angeschlossen werden. Derartige Anschlußelemente sind in der Fluidtechnik bzw. Pneumatik bekannt. Auch beim Gehäuseteil 41 wird zur Vereinfachung der Herstellung vorgeschlagen, die einzelnen Abschnitte der Temperierkanäle als Durchgangs- bzw. Sacklochbohrungen einzubringen und die nicht benötigten Längenabschnitte der Bohrungen mittels Blindstopfen 413 zu verschließen. In der Figur 11 ist darüber hinaus ein Gehäuseteil 41 für die Durchleitung des Temperiermediums dargestellt, welches beispielsweise bei Ausbildung von lediglich einer oder zwei Austrittsöffnungen 4a im Gehäuseteil 40 der Auftragsdüse 4 gemäß Fig. 13 zur Anwendung gelangt, während das in der Figur 12 dargestellte Gehäuse 41 einen um die Temperierkanalabschnitte 414 verlängerten Strömungsweg aufweist und von daher beispielsweise für das Gehäuseteil 40 mit drei Austrittsöffnungen 4a gemäß Figur 14 verwendbar ist, hier jedoch nicht maßstabsgetreu dargestellt ist.

In jedem Fall werden die Gehäuseteile 40, 41, wie in Figur 10 dargestellt, miteinander verbunden, so daß eine exakte Trennung des Klebstoffstromes M1, M2 durch das Gehäuseteil 40 und des Stromes an Temperiermedium mit Vorlauf VH und Rücklauf RH durch das Gehäuseteil 41 vorgenommen ist. Infolge des Durchlaufs des Vorlaufs VH bzw. Rücklaufs RH des Temperiermediums erwärmt sich das Gehäuseteil 41 auf die Temperatur des Temperiermediums, d. h. die für die Verarbeitung des Klebstoffes gewünschte Temperatur und erwärmt gleichzeitig das mit diesem Gehäuseteil 41 verbundene Gehäuseteil 40, welches mit dem Klebstoff in Kontakt kommt, so daß auch dieses Gehäuseteil 40 der Auftragsdüse 4 auf die für die Verarbeitung des Klebstoffes gewünschte Temperatur erwärmt wird und der durch das temperierte Gehäuseteil 40 geführte Klebstoff auf der gewünschten Verarbeitungstemperatur gehalten wird.

Die Erwärmung der Verteileinrichtung 3, Zuführleitungen 6 und Auftragsdüsen 4 erfolgt somit dadurch, daß das Temperiermedium in einem geschlossenen Kreislauf geführt wird und mit geringem Aufwand an den mit Klebstoff in Kontakt kommenden Teilen räumlich getrennt vorbeigeführt wird, so daß sämtliche mit dem Klebstoff in Berührung kommende Teile der Vorrichtung auf die für die Verarbeitung gewünschte Temperatur erwärmt werden. Es ist von daher offensichtlich, daß der Platzbedarf einer derartigen Vorrichtung wesentlich verringert wird und damit die Handhabung erleichtert wird.

Um auch die Förderleitung 7 zwischen der Dosiereinrichtung 1 und der Verteileinrichtung 3 auf eine für die Verarbeitung des Klebstoffes gewünschte Temperatur zu erwärmen, weist diese den in der Figur 15 näher dargestellten Aufbau auf.

Wie dieser Figur 15 zu entnehmen ist, umfaßt die Förderleitung 7 einen zentral angeordneten Klebstoffkanal 73, der von jeweils zwei der Führung des Vorlaufs eines Temperiermediums dienenden Temperierkanälen 71 und zwei der Führung des Rücklaufs eines Temperiermediums dienenden Temperierkanälen 72 umgeben ist. Wie auch schon bei der Zuführleitung 6 gemäß Figur 16 erläutert, sind auch bei der Förderleitung 7 die Temperierkanäle 71, 72 schraubenlinienförmig um den Klebstoffkanal 73 verlaufend angeordnet und ermöglichen bei Durchleitung eines entsprechenden Temperiermediums eine Erwärmung des mit dem Klebstoff in Kontakt kommenden Klebstoffkanals 73 auf eine für die Verarbeitung des Klebstoffes gewünschte Temperatur. Zwischen den einzelnen Temperierkanälen 71, 72 sind Abstandshalter in Form von Moosgummischläuchen 74 angeordnet, die unerwünschte Bewegungen der Temperierkanäle 71, 72 unterbinden und die gesamte Anordnung von Klebstoffkanal 73, Temperierkanälen 71, 72 und Abstandshaltern 74 ist von einer wärmedämmenden Hülle 70 umgeben, um auch hier die Erwärmung des Klebstoffkanals 73 auf eine für die Verarbeitung des Klebstoffes gewünschte Temperatur zu unterstützen. Zusätzlich ist außen an der Förderleitung 7 noch ein schraubenlinienförmig gewundener Draht 75 vorgesehen, um die Förderleitung 7 gegen zu starkes Abknicken o. ä. Belastungen zu schützen.

Für die Durchleitung des Temperiermediums durch die Temperierkanäle 71, 72 der Förderleitung 7 kann in Abhängigkeit von der Größe der gesamten Vorrichtung und der Menge des geförderten Klebstoffes vorgesehen sein, entweder einen eigenen Kreislauf eines Temperiermediums mit Vorlauf VF und Rücklauf RF wie in Figur 1 dargestellt vorzusehen, wie es auch möglich ist, die Förderleitung 7 in den geschlossenen Kreislauf des Temperiermediums zur Temperierung der Verteileinrichtung 3, der Zuführleitungen 6 und der Auftragsdüsen 4 zu integrieren. Dazu kann beispielsweise der Vorlauf VT von der Temperiereinrichtung 2 abweichend von der Darstellung gemäß Figur 1 nicht auf direktem Wege zur Verteileinrichtung 3 verlaufend angeordnet sein, sondern über den Vorlauf VF der Förderleitung 7 zur Verteileinrichtung 3 geführt sein. Umgekehrt wird der Rücklauf RT von der Verteileinrichtung 3 über den Rücklauf mit den entsprechenden Temperierkanälen 72 der Förderleitung 7 geführt und gelangt erst nachfolgend zur Temperiereinrichtung 2.

Eine besonders kompakte und einfach aufgebaute Vorrichtung ist in der Figur 17 dargestellt. Bei dieser Vorrichtung wird zur Temperierung der gesamten mit Klebstoff in Kontakt kommenden Bauteile der Vorrichtung lediglich eine einzige Temperiereinrichtung 2 benötigt. Der Vorlauf VT des Temperiermediums wird ausgehend von der Temperiereinrichtung 2 zunächst der Dosiereinrichtung 1 zugeleitet und dient hier zur Erwärmung der Bauteile der Dosiereinrichtung 1 auf die für die Verarbeitung des Klebstoffes gewünschte Temperatur. Nachfolgend gelangt dieser Vorlauf als Vorlauf VF über die Förderleitung 7 zur Verteileinrichtung 3, von der aus der Vorlauf auf die einzelnen Zuführleitungen 6 zu den Auftragsdüsen 4 aufgeteilt und die Temperierkanäle 61 der Zuführleitungen 6 als Vorlauf VH durchströmt. Der von den Auftragsdüsen 4 durch die Förderleitungen 6 zurückströmende Rücklauf RH des Temperiermediums wird in der bereits beschriebenen Weise in der Verteileinrichtung 3 zusammengeführt und tritt als Rücklauf RF in die Förderleitung 7 ein, gelangt nachfolgend in die Förderleitung 7, von dort in die Dosiereinrichtung 1 und strömt von der Dosiereinrichtung 1 als Rücklauf RT wieder in die Temperiereinrichtung 2, womit der Kreislauf des Temperiermediums geschlossen ist.

Die vorangehend beschriebene Vorrichtung zum gleichzeitigen Aufbringen einer Vielzahl von Klebepunkten eines Klebstoffes auf ein Substrat ist insbesondere zur Anwendung bei der Verbindung von Automobilblechen geeignet. Hierbei wird eine ausreichend große Anzahl Auftragsdüsen 4 entsprechend dem vorgegebenen Klebeschema in einer hier der Einfachheit halber nicht dargestellten Halterung mittels geeigneter Befestigungselemente befestigt, in der auch die Verteileinrichtung 3 starr angebracht werden kann. Die Auftragsdüsen 4 und die Verteileinrichtung 3 werden mittels Zuführleitungen 6 miteinander verbunden, wodurch ein temperierbares Auftragswerkzeug mit besonders geringem Raumbedarf und niedrigem Gewicht geschaffen ist. Um hierbei möglichst große Flexibilität hinsichtlich nachträglicher Veränderungen und auch eines evtl. notwendig werdenden Austausches einzelner Auftragsdüsen 4 zu gewährleisten, kann die Verteileinrichtung 3 modulartig aufgebaut und erweiterbar sein, in dem eine genügend große Anzahl Verteilkanäle 313 und entsprechende Temperierkanäle 302, 322 in jeweils gleicher Anzahl vorgesehen werden. Bei dem Ausführungsbeispiel gemäß der Zeichnung sind beispielsweise dreißig Temperierkanäle 302, 322 und dementsprechend dreißig Verteilkanäle 313 für den Klebstoff vorgesehen. Sofern nicht sämtliche Temperier- bzw. Verteilkanäle benötigt werden, können diese auf einfache Weise mittels Blindstopfen verschlossen werden.

Eine derartig aufgebaute modulartig erweiterbare Vorrichtung kann innerhalb kürzester Zeit an verschiedene Anforderungen umgerüstet und gewartet werden, was die Wirtschaftlichkeit der vorangehend beschriebenen Vorrichtung steigert.

## Patentansprüche

1. Vorrichtung zum Aufbringen von Klebstoff in Form von Klebepunkten mittels Auftragsdüsen auf ein Substrat, mit einer Dosiereinrichtung und einer der Dosiereinrichtung nachgeordneten Verteileinrichtung zum Fördern und Verteilen eines vorbestimmbaren Volumens an Klebstoff zu jeder Auftragsdüse und einer Temperiereinrichtung zum Erwärmen eines Temperiermediums zum Temperieren des Klebstoffes, wobei die Dosiereinrichtung und die Verteileinrichtung mittels einer einen Klebstoffkanal enthaltenden Förderleitung miteinander verbunden sind und von der Verteileinrichtung Zuführleitungen enthaltend einen Klebstoffkanal zu den Auftragsdüsen führen, **dadurch gekennzeichnet,** daß ein geschlossener Kreislauf für das Temperiermedium, ausgehend von der Temperiereinrichtung (2) über die Verteileinrichtung (3) und die Zuführleitungen (6) zu den Auftragsdüsen (4) und wieder zurück über die Zuführleitungen (6) und die Verteileinrichtung (3) zu der Temperiereinrichtung (2) gebildet ist.

2. Vorrichtung nach Anspruch 1, **dadurch gekennzeichnet,** daß in der Verteileinrichtung (3), den Zuführleitungen (6) und den Auftragsdüsen (4) Temperierkanäle für das Durchleiten sowohl eines Vor- als auch Rücklaufs des in dem geschlossenen Kreislauf geführten Temperiermediums ausgebildet sind.

3. Vorrichtung nach einem der Ansprüche 1 oder 2, **dadurch gekennzeichnet,** daß die Verteileinrichtung (3) mehrteilig mit einem Oberteil (30) und einem Unterteil (32) für das Durchleiten des Vor- bzw. Rücklaufs des Temperiermediums und einem zwischen Ober- und Unterteil angeordneten Mittelteil (31) zum Durchleiten des Klebstoffes ausgebildet ist.

4. Vorrichtung nach Anspruch 3, **dadurch gekennzeichnet,** daß die Verteileinrichtung (3) zylindrisch ausgebildet ist und das Oberteil (30), das Mittelteil (31) und das Unterteil (32) je einen Zylinderabschnitt bilden und axial übereinander angeordnet und miteinander verbindbar sind, so daß eine gute Wärmeleitung von dem den Vor- bzw. Rücklauf des Temperiermediums durchleitenden Oberteil (30) bzw. Unterteil (32) auf das den Klebstoff durchleitende Mittelteil (31) bewirkbar ist.

5. Vorrichtung nach einem der Ansprüche 3 oder 4, **dadurch gekennzeichnet,** daß das Oberteil (30) und das Unterteil (32) der Verteileinrichtung (3) jeweils zentrisch in ihrem Inneren einen Sammelraum (301, 321) für den Vor- bzw. Rücklauf des Temperiermediums und eine Vielzahl vom Sammelraum (301, 321) radial nach außen führende Temperierkanäle (302, 322) und einen aus dem Sammelraum (301, 321) axial zu der dem Mittelteil (31) abgewandten Außenseite führenden Sammelkanal (300, 320) aufweisen und an die Temperierkanäle (302, 322) die Temperierkanäle der Zuführleitungen (6) und an die Sammelkanäle (300, 320) der Vor- bzw. Rücklauf der Temperiereinrichtung (2) anschließbar sind.

6. Vorrichtung nach einem der Ansprüche 3 bis 5, **dadurch gekennzeichnet,** daß das Oberteil (30) und das Unterteil (32) der Verteileinrichtung (3) einander entsprechend ausgebildet sind.

7. Vorrichtung nach einem der Ansprüche 3 bis 6, **dadurch gekennzeichnet,** daß das Mittelteil (31) der Verteileinrichtung (3) einen zentrisch in seinem Inneren ausgebildeten Verteilraum (312) für den Klebstoff und eine Vielzahl vom Verteilraum (312) radial nach außen führende Verteilkanäle (313) und einen von außen radial in den Verteilraum (312) führenden Zufuhrkanal (311) aufweist und an die Verteilkanäle (313) die Klebstoffkanäle der Zuführleitungen (6) und an den Zufuhrkanal (311) der Klebstoffkanal der Förderleitung (7) anschließbar sind.

8. Vorrichtung nach einem der Ansprüche 3 bis 7, **dadurch gekennzeichnet,** daß das Oberteil (30) und das Unterteil (32) der Verteileinrichtung (3) jeweils eine mit der Anzahl der Verteilkanäle (313) des Mittelteils (31) übereinstimmende Anzahl Temperierkanäle (302, 322) aufweisen und die Temperierkanäle (302, 322) und die Verteilkanäle (313) in axialer Richtung der Verteileinrichtung (3) gesehen deckungsgleich angeordnet sind und zwischen benachbarten Temperierkanälen und Verteilkanälen Schraublöcher (31a, 33a, 34a) für die Verbindung von Oberteil (30) Mittelteil (31) und Unterteil (32) der Verteileinrichtung (3) ausgebildet sind.

9. Vorrichtung nach einem der Ansprüche 1 bis 8, **dadurch gekennzeichnet,** daß die Zuführleitungen (6) jeweils einen Klebstoffkanal (63), einen Temperierkanal (61) für die Durchleitung des Vorlaufs des Temperiermediums und einen Temperierkanal (62) für die Durchleitung des Rücklaufs des Temperiermediums und eine den Klebstoffkanal (63) und die Temperierkanäle (61, 62) umgebende wärmedämmende Hülle (60) aufweisen, wobei die Temperierkanäle (61, 62) schraubenlinienförmig um den Klebstoffkanal (63) verlaufend angeordnet sind.

10. Vorrichtung nach einem der Ansprüche 1 bis 9, **dadurch gekennzeichnet,** daß jede Auftragsdüse (4) ein Gehäuse aufweist und das Gehäuse einen Eingang für den Klebstoff und hiervon zu mindestens einer Austrittsöffnung (4a) führende, ggf. sich verzweigende Kanäle für den Klebstoff umfaßt und Kanäle mit einem Eingang und Ausgang für das Durchleiten des Temperiermediums aufweist.

11. Vorrichtung nach Anspruch 10, **dadurch gekennzeichnet,** daß mehrere, vorzugsweise zwei oder drei Austrittsöffnungen (4a) für den Klebstoff in einer Auftragsdüse (4) vorgesehen sind.

12. Vorrichtung nach einem der Ansprüche 10 oder 11, **dadurch gekennzeichnet,** daß das Gehäuse der Auftragsdüse (4) zweiteilig mit zwei Gehäuseteilen (40, 41) ausgebildet ist, wobei in dem einen Gehäuseteil (40) die Kanäle für das Durchleiten des Klebstoffes mit Eingang und Austrittsöffnungen (4a) und im anderen Gehäuseteil (41) die Kanäle für das Durchleiten des Temperiermediums mit Eingang und Ausgang ausgebildet sind.

13. Vorrichtung nach einem der Ansprüche 1 bis 12, **dadurch gekennzeichnet,** daß die Förderleitung (7) einen Klebstoffkanal (73) und jeweils mindestens einen Temperierkanal (71, 72) für das Durchleiten des Vor- bzw. Rücklaufes eines Temperiermediums aufweist und die Temperierkanäle (71, 72) schraubenlinienförmig um den Klebstoffkanal (73) verlaufend angeordnet sind und von einer gemeinsamen wärmedämmenden Hülle (70) umgeben sind.

14. Vorrichtung nach Anspruch 13, **dadurch gekennzeichnet,** daß jeweils zwei Temperierkanäle (71, 72) für die Durchleitung des Vor- bzw. Rücklaufs des Temperiermediums vorgesehen sind und schraubenlinienförmig um den Klebstoffkanal (73) verlaufend angeordnet sind.

15. Vorrichtung nach einem der Ansprüche 13 oder 14, **dadurch gekennzeichnet,** daß Abstandshalter, wie Moosgummischläuche (74) zwischen den schraubenlinienförmig um den Klebstoffkanal (73) angeordneten Temperierkanälen (71, 72) der Förderleitung (7) vorgesehen sind.

16. Vorrichtung nach einem der Ansprüche 1 bis 15, **dadurch gekennzeichnet,** daß die Förderleitung (7) mit ihren Temperierkanälen (71, 72) in den geschlossenen Kreislauf des Temperiermediums integriert ist.

17. Vorrichtung nach Anspruch 16, **dadurch gekennzeichnet,** daß die Temperierkanäle (71, 72) der Förderleitung (7) der Führung des Vor- bzw. Rücklaufes des Temperiermediums zwischen der Temperiereinrichtung (2) und der Verteileinrichtung (3) dienen.

18. Vorrichtung nach einem der Ansprüche 1 bis 17, **dadurch gekennzeichnet,** daß der geschlossene Kreislauf für das Temperiermedium durch sämtliche der Förderung und/oder Führung des Klebstoffes dienende Teile der Vorrichtung geführt ist, dergestalt, daß der geschlossene Kreislauf ausgehend von der Temperiereinrichtung (2) über die Dosiereinrichtung (1) die Förderleitung (7), die Verteileinrichtung (3) und die Zuführleitungen (6) zu den Auftragsdüsen (4) und nachfolgend wieder zurück über die Zuführleitungen (6), die Verteileinrichtung (3), die Förderleitung (7) und die Dosiereinrichtung (1) in die Temperiereinrichtung (2) gebildet ist.
